# EUROPÄISCHE PATENTSCHRIFT

(11) **EP 3 959 102 B1**
(45) Veröffentlichungstag und Bekanntmachung des Hinweises auf die Patenterteilung: **22.01.2025**
(21) Anmeldenummer: 20722286.0
(22) Anmeldetag: 24.04.2020
(51) Int. Cl.: B60N 2/90, B60N 2/68, B60R 22/34, B60N 2/60

(54) **SITZTEIL FÜR EINEN FAHRZEUGSITZ, FAHRZEUGSITZ UND KRAFTFAHRZEUG**
SEAT PART FOR A VEHICLE SEAT, VEHICLE SEAT, AND MOTOR VEHICLE
ASSISE POUR UN SIÈGE DE VÉHICULE, SIÈGE DE VÉHICULE ET VÉHICULE À MOTEUR

(30) Priorität: 26.04.2019 DE 102019206027
(43) Veröffentlichungstag der Anmeldung: 02.03.2022
(73) Patentinhaber: VOLKSWAGEN AKTIENGESELLSCHAFT, 38440 Wolfsburg (DE)
(72) Erfinder: PACHONICK, Alexander, 38126 Braunschweig (DE); SIEMANN, Christin, 38444 Wolfsburg (DE)
(86) Internationale Anmeldenummer: PCT/EP2020/061464
(87) Internationale Veröffentlichungsnummer: WO 2020/216902

(56) Entgegenhaltungen:
- EP-A1- 1 241 060
- EP-A1- 2 752 332
- US-A1- 2012 313 408
- US-A1- 2018 029 512

## Beschreibung

Die Erfindung betrifft einen Fahrzeugsitz für ein Kraftfahrzeug, mit einem Sitzteil, das ein Sitzpolster und zumindest eine eine Seite des Sitzpolsters überdeckende Seitenverkleidung aufweist, sowie einen dem Sitzteil zugeordneten oder zuordenbaren Anschnallgurt für einen Benutzer des Fahrzeugsitzes, wobei der Anschnallgurt über einen Stützabschnitt der Seitenverkleidung führbar ist, sowie mit einem Gurtstraffer, der dazu ausgebildet ist, den Anschnallgurt bei Bedarf zu spannen.

Außerdem betrifft die Erfindung ein Kraftfahrzeug mit dem vorstehend beschriebenen Fahrzeugsitz.

Fahrzeugsitze der eingangs genannten Art sind aus dem Stand der Technik bekannt. Üblicherweise weisen Fahrzeugsitze für Kraftfahrzeuge ein Sitzteil auf, das auf einem Sitzgestell gelagert ist und ein Sitzpolster aufweist, auf welchem eine Person bequem platznehmen kann. Um das Sitzpolster zu schonen, insbesondere um zu vermeiden, dass an dem Sitzpolster Abriebserscheinungen durch einen Anschnallgurt entstehen, ist es bekannt, dem Sitzpolster zumindest einer Seite eine Seitenverkleidung aus einem im Vergleich zum Sitzpolster harten Material zuzuordnen, über welche der Anschnallgurt führbar ist. Dabei weist die Seitenverkleidung einen Stützabschnitt auf, über welchem im Normalfall der Anschnallgurt geführt ist, sodass dort, wenn ein Gurtstraffer aktiviert wird, besonders hohe Kräfte auf die Seitenverkleidung wirken.

Aus der Offenlegungsschrift US 2012/313408 A1 ist bereits ein Fahrzeugsitz für ein Kraftfahrzeug der gattungsgemäßen Art bekannt. Weitere Fahrzeugsitze sind aus den Offenlegungsschriften US 2018/029512 A1, EP 2 752 332 A1 und EP 1 241 060 A1 bekannt.

Der Erfindung liegt die Aufgabe zugrunde, einen verbesserten Fahrzeugsitz mit einem Sitzteil zu schaffen, das insbesondere gewährleistet, dass die Seitenverkleidung ausreichend stabil ist, um dem Wirken eines Gurtstraffers, welcher den Anschnallgurt spannt und dadurch gegen die Seitenverkleidung presst, standzuhalten.

Die der Erfindung zugrundeliegende Aufgabe wird durch einen Fahrzeugsitz mit den Merkmalen des Anspruchs 1 gelöst. Dieser hat den Vorteil, dass auf einfache und kostengünstige Art die Seitenverkleidung verstärkt und insbesondere an einem Zerbrechen gehindert wird. Erfindungsgemäß ist dazu zwischen dem Sitzpolster und der Seitenverkleidung im Bereich des Stützabschnitts ein zumindest im Wesentlichen nur durch Biegung verlagerbares Kunststoffteil angeordnet. Das Kunststoffteil dient somit als Deformationselement dazu, eine Belastungskraft aufzunehmen und die Seitenverkleidung von innen beziehungsweise von der der Krafteinleitung abgewandten Seite zu stützen, sodass eine Beschädigung der Seitenverkleidung vermieden wird. Das Kunststoffteil nimmt die Deformationskräfte auf und sichert dadurch den Erhalt der Seitenverkleidung. Dadurch, dass das Kunststoffteil insbesondere als separates Bauteil ausgebildet ist, ist eine kostengünstige Herstellung sowie eine einfache Montage an dem Sitzteil gewährleistet. Ferner kann durch die separate Ausbildung des Kunststoffteils die Sitzverkleidung, insbesondere die Seitenverkleidung, auch ohne das Stützelement beziehungsweise Kunststoffteil montiert wenn, wenn dies erforderlich oder zweckdienlich ist. Im Umkehrschluss ergibt sich daraus, dass das Kunststoffteil auch nachträglich an einem entsprechenden Sitzteil angeordnet werden kann.

Gemäß einer bevorzugten Weiterbildung der Erfindung ist das Kunststoffteil an die Form der Seitenverkleidung derart angepasst, dass es zumindest bereichsweise flächig an dieser anliegt. Dadurch ist eine vorteilhafte Kraftübertragung von der Seitenverkleidung auf das Kunststoffteil gewährleistet sowie eine flächige Abstützung der Seitenverkleidung.

Besonders bevorzugt liegt das Kunststoffteil auf einem Sitzgestell des Sitzteils auf und erstreckt sich bis zu dem Stützabschnitt der Seitenverkleidung in die Höhe. Kräfte, die auf den Stützabschnitt durch den gespannten Anschnallgurt ausgeübt werden, werden somit durch das Kunststoffteil in das Sitzgestell abgeleitet, wodurch die Seitenverkleidung entlastet wird.

Gemäß einer bevorzugten Weiterbildung der Erfindung ist das Kunststoffteil dazu ausgebildet, dass es durch die Verformung in seiner Höhe verkleinerbar ist. Durch die Biegebewegung des Kunststoffteils wird somit dessen Höhe reduziert, sodass die Seitenverkleidung im Bereich des Stützabschnitts bereichsweise in Richtung des Sitzgestells verschoben werden kann, jedoch derart durch das Kunststoffteil gestützt ist, dass ein Brechen der Seitenverkleidung verhindert ist. Das Kunststoffteil ist bevorzugt als Kunststoffspritzteil aus einem Vollmaterial ausgebildet.

Erfindungsgemäß weist das Kunststoffteil zumindest eine Rippenstruktur auf. Die Rippenstruktur kann an der Außenseite und/oder an der Innenseite des Kunststoffteils ausgebildet sein. Außerdem können Rippen der Rippenstruktur als Materialvorsprünge, Materialvertiefungen oder Materialwölbungen ausgebildet sein. So ist beispielsweise vorgesehen, dass bevorzugt auf der Außenseite mehrere Rippen durch Vertiefungen in der Außenseite ausgebildet sind, und auf der Innenseite mehrere Rippen, die durch Materialvorsprünge gebildet sind, wobei zumindest einige der Rippen von der Außenseite und/oder der Innenseite quer zueinander verlaufend ausgerichtet sind.

Erfindungsgemäß ist vorgesehen, dass das Kunststoffteil alternativ oder zusätzlich eine Wabenstruktur aufweist. Insbesondere weist das Kunststoffteil dazu mehrere insbesondere sechseckförmige Wabenelemente auf, die fest miteinander verbunden sind und beispielsweise reihenförmig oder matrixförmig verteilt angeordnet sind, um den Stützabschnitt der Seitenverkleidung zu stützen.

Erfindungsgemäß weist das Kunststoffteil alternativ oder zusätzlich eine Fachwerkstruktur auf. Durch die Fachwerkstruktur weist das Kunststoffteil mehrere geneigt zueinander verlaufende und sich kreuzende Streben auf, durch welche der Stützabschnitt des Sitzgestells vorteilhaft abgestützt wird.

Das erfindungsgemäße Kraftfahrzeug mit den Merkmalen des Anspruchs 5 zeichnet sich durch zumindest einen erfindungsgemäßen Fahrzeugsitz aus. Auch hieraus ergeben sich die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: einen Fahrzeugsitz einer vereinfachten Seitenansicht,
- Figur 2: eine vereinfachte Schnittdarstellung durch eine Seitenverkleidung des Sitzteils mit einem vorteilhaften Kunststoffteil,
- Figuren 3A bis 3C: ein vorteilhaftes Ausführungsbeispiel des Kunststoffteils in unterschiedlichen Darstellungen,
- Figur 4: ein weiteres vorteilhaftes Ausführungsbeispiel des Kunststoffteils, und
- Figur 5: ein weiteres vorteilhaftes Ausführungsbeispiel des Kunststoffteils.

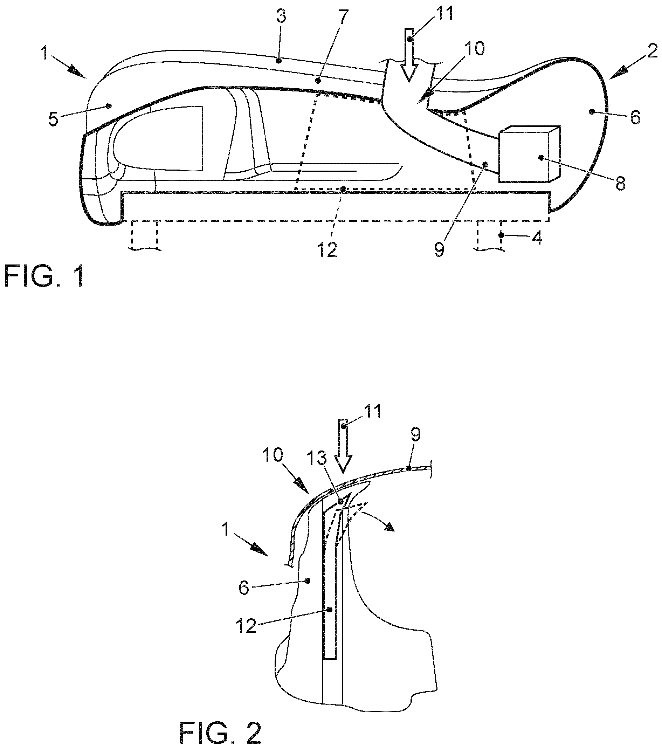

Figur 1 zeigt in einer vereinfachten Seitenansicht ein Sitzteil 1 für einen Fahrzeugsitz 2 eines hier nicht näher dargestellten Kraftfahrzeugs. Das Sitzteil 1 weist ein Sitzpolster 3 auf, das auf einem hier nur angedeuteten Sitzgestell 4 aufliegt. Eine Längsseite 5 des Sitzpolsters 3 ist durch eine Seitenverkleidung 6 zumindest im Wesentlichen überdeckt. Die Seitenverkleidung 6 ist vorliegend aus Kunststoff gefertigt und an die Form des Sitzpolsters 3 insoweit angepasst, dass es das Sitzpolster 3 an einer Oberkante 7 der Längsseite 5 bereichsweise überdeckt, um die Oberkante 7 des Sitzpolsters 3 zu schützen.

Dem Sitzteil 1 ist bevorzugt ein Gurtstraffer 8 zugeordnet, der mit einem Anschnallgurt 9 zusammenwirkt, um diesen beispielsweise bei einem Auffahrunfall zu straffen, um eine auf dem Fahrzeugsitz befindliche Person vor Verletzungen zu schützen. Der Anschnallgurt 9 erstreckt sich dabei von dem Gurtstraffer 8 an der Außenseite der Seitenverkleidung 6 über das Sitzpolster 3 auf die von der Längsseite 5 abgewandte Längsseite des Sitzpolsters 3 beziehungsweise des Sitzteils 1. Insbesondere ist das Sitzteil 1 auf der abgewandten Längsseite mit einem der Seitenverkleidung 6 entsprechenden Seitenverkleidung versehen. Der Anschnallgurt 9 umschlingt dabei die Oberkante der Seitenverkleidung 6 in einem Stützabschnitt 10. Dieser Stützabschnitt 10 muss die Kräfte aufnehmen, die bei einer Aktivierung des Gurtstraffers 8 entstehen und von dem Haltegurt 9 auf das Sitzteil 1 gemäß dem Pfeil 11 mit einer Kraft F auf die Seitenverkleidung 6 aufgebracht werden. Der Gurtstraffer 8 ist bevorzugt karosserieseitig an dem Kraftfahrzeug dem Fahrzeugsitz 2 zugeordnet befestigt. Alternativ kann der Gurtstraffer 8 auch an dem Fahrzeugsitz 2 selbst, insbesondere an dem Sitzteil 1 oder an einer Rückenlehne des Fahrzeugsitzes 2, oder an einem Sitzgestell des Fahrzeugsitzes 2 angeordnet sein.

Zwischen dem Sitzpolster 3 und der Seitenverkleidung 6 ist daher im Bereich des Stützabschnitts 10 ein vorteilhaftes Kunststoffteil 12 angeordnet, das in Figur 1 nur gestrichelt dargestellt ist, weil es hinter der Seitenverkleidung 6 liegt, und welches auf dem Sitzgestell 4 aufliegt und in die Höhe bis zu der Oberkante der Seitenverkleidung 6 beziehungsweise des Sitzpolsters 5 erstreckt, um die dort durch den Haltegurt 9 auf die Seitenverkleidung 6 aufgebrachten Kräfte aufzunehmen und an das Sitzgestell 4 weiterzuleiten. Das Kunststoffteil 12 ist dabei dazu ausgebildet, insbesondere nur durch Biegung verformt zu werden.

Figur 2 zeigt dazu das Sitzteil 1 in einer vereinfachten Schnittdarstellung durch die Seitenverkleidung 6. Das Kunststoffteil 12 ist der Innenseite beziehungsweise der dem Sitzpolster 5 zugewandten Seite der Seitenverkleidung 6 zugeordnet und liegt insbesondere zumindest abschnittsweise flächig an dieser an. An seinem oberen Ende weist das Kunststoffteil 12 einen seitlichen Vorsprung 13 auf, der dazu dient, die Oberkante 7 des Sitzpolsters 3 zu bedecken, unterhalb der Oberkante des Verkleidungselements 6. Wird nun eine Kraft, wie in Figur 2 durch den Pfeil 11 angezeigt, von oben durch den Anschnallgurt 9, der in Figur 2 vereinfacht gezeigt ist, bei einem Gurtstraffvorgang aufgebracht, so wird diese Kraft zunächst von der Seitenverkleidung 6 auf den Seitenvorsprung 13 des Kunststoffteils 12 übertragen, sodass sich dieses zumindest bereichsweise verbiegt, wie durch gestrichelte Linien und einen weiteren Pfeil (ohne Bezugszeichen) angedeutet. Dadurch wird die Belastungskraft durch das Kunststoffteil 12 aufgenommen, welches die Seitenverkleidung 6 abstützt und dadurch insbesondere die Seitenverkleidung 6 an einem Zerbrechen hindert. Dadurch wird erreicht, dass die Seitenverkleidung 6 auch beim Gurtstraffvorgang und hohen Belastungen des Stützabschnitts 10 nicht gebrochen wird, was zu scharfkantigen Einzelteilen führen könnte.

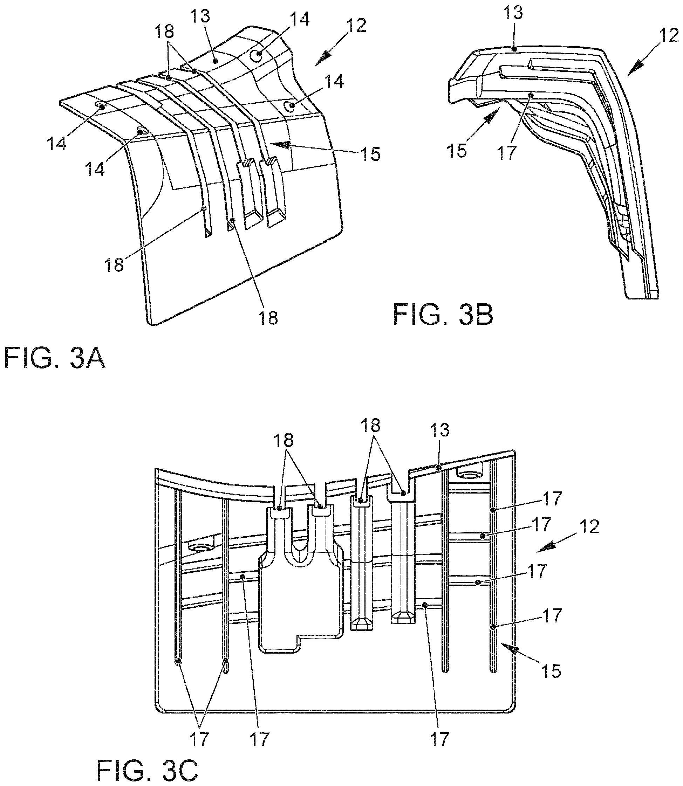

Figuren 3A bis 3C zeigen das Kunststoffteil 12 gemäß einem vorteilhaften Ausführungsbeispiel in unterschiedlichen Darstellungen. Figur 3A zeigt das Kunststoffteil 12 in einer perspektivischen Darstellung, Figur 3B in einer Seitenansicht und Figur 3C in einer Draufsicht auf die dem Sitzpolster 3 zugeordnete Innenseite. Das Kunststoffteil 12 ist in seiner Form eine Innenseite der Seitenverkleidung 6 derart angepasst, dass, wie vorstehend bereits erwähnt, eine zumindest bereichsweise flächige Anlage des Kunststoffteils 12 an der Seitenverkleidung 6 gewährleistet ist. Optional ist das Kunststoffteil 12 formschlüssig mit der Seitenverkleidung 6 außerdem durch Positionierstifte der Seitenverkleidung 6 verbunden, die in Aufnahmen 14 des Kunststoffteils 12 eingereifen und dadurch eine korrekte Anordnung des Kunststoffteils 12 an der Seitenverkleidung 6 gewährleisten. Gemäß einem weiteren Ausführungsbeispiel sind die Aufnahmen 14 nicht an dem Kunststoffteil 12, sondern an der Seitenverkleidung 6 ausgebildet, sodass die Positionierstifte an dem Kunststoffteil 12 ausgebildet sind.

Weiterhin weist das Kunststoffteil 12 mehrere Rippenstrukturen 15, 16 auf. Bei den Rippenstrukturen 15 handelt es sich um Materialvorsprünge auf der dem Sitzpolster 3 zugewandten Innenseite des Kunststoffteils 12. Die Materialvorsprünge 17 erstrecken sich rippenförmig und parallel zueinander über die dem Sitzpolster 3 zugewandte Innenseite des Kunststoffteils 12. Dabei ist eine erste Gruppe von Materialvorsprüngen 12 der Rippenstruktur 15 quer, insbesondere senkrecht zu einer zweiten Gruppe von Materialvorsprüngen 17 ausgerichtet. Die Rippenstruktur 16 ist durch mehrere parallel zueinander streckende Materialvertiefungen ausgebildet, die durch konkave Einwölbungen oder nutförmige Vertiefungen auf der der Seitenverkleidung 6 zugewandten Außenseite des Kunststoffteils 12 ausgebildet sind. Durch die Ausbildung als Auswölbungen führen die Vertiefungen 18 zu Materialerhebungen auf der Rückseite des Kunststoffteils 12, die ebenfalls zur Bildung der Rippenstruktur 15 mit dienen. Durch die Rippenstrukturen 15, 16 erhält das Kunststoffteil 12 eine hohe Festigkeit und gewährleistet damit hohe Belastungskräfte im Stützabschnitt 10.

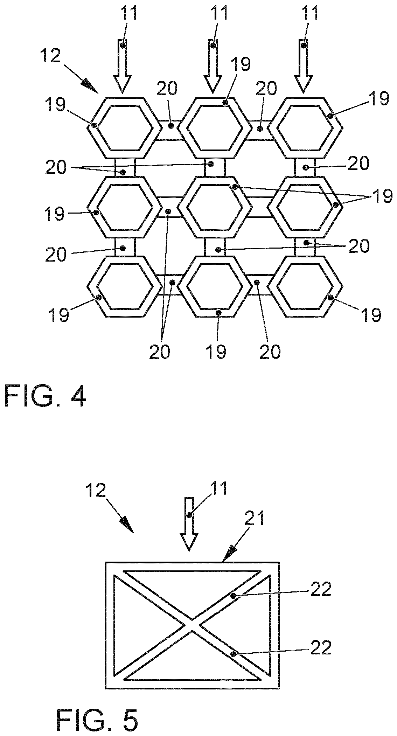

Figur 4 zeigt ein weiteres Ausführungsbeispiel des Kunststoffteils 12, diesmal in einer Draufsicht. Im Unterscheid zu dem vorhergehenden Ausführungsbeispiel weist das Kunststoffteil 12 nunmehr eine Wabenstruktur mit mehreren Wabenelementen 19 auf, die durch Verbinder 20 miteinander verbunden sind und gemäß dem vorliegenden Ausführungsbeispiel matrixförmig angeordnet sind. Die Anzahl der Reihen und Spalten der Wabenelemente 19 kann je nach Anwendungsfall variiert werden. Insbesondere kann das Kunststoffteil 12 auch nur eine Spalte von Wabenelementen 19 aufweisen oder nur eine Reihe. Durch die Wabenelemente 19 sind Hohlräume geschaffen, die ein Verformen des jeweiligen Wabenelements 19 und damit des Kunststoffteils 12 insgesamt in Richtung der Belastung gemäß Pfeil 11 durch Biegung der einzelnen Wabenelemente 19 gewährleisten.

Figur 5 zeigt ein weiteres Ausführungsbeispiel des Kunststoffteils 12, in einer Draufsicht, das sich von den vorhergehenden Ausführungsbeispielen dadurch unterscheidet, dass es eine Fachwerkstruktur 21 mit mehreren sich kreuzenden Stützstreben 22 aufweist.

Alle Ausführungsbeispiele haben gemein, dass durch Verbiegen, insbesondere Deformieren, des Kunststoffteils 12 die Belastungskräfte gemäß Pfeil 11 in dem Stützabschnitt 10 aufgenommen und die Seitenverkleidung 6 vorteilhaft gestützt und geschützt wird.

### Bezugszeichenliste

- 1: Sitzteil
- 2: Fahrzeugsitz
- 3: Sitzpolster
- 4: Sitzgestell
- 5: Längsseite
- 6: Seitenverkleidung
- 7: Oberkante
- 8: Gurtstraffer
- 9: Anschnallgurt / Haltegurt
- 10: Stützbereich
- 11: Pfeil
- 12: Kunststoffteil
- 13: Seitenvorsprung
- 14: Aufnahme
- 15: Rippenstruktur
- 16: Rippenstruktur
- 17: Materialvorsprung
- 18: Vertiefung
- 19: Wabenelement
- 20: Verbinder
- 21: Fachwerkstruktur
- 22: Stützstrebe

## Patentansprüche

1. Fahrzeugsitz für ein Kraftfahrzeug, mit einem Sitzteil (1), das ein Sitzpolster (3) und eine eine Längsseite des Sitzpolsters (3) überdeckende Seitenverkleidung (6) aufweist, und mit einem zumindest dem Sitzteil (1) zugeordneten Anschnallgurt (9) für einen Benutzer des Fahrzeugsitzes (2), wobei der Anschnallgurt (9) über zumindest eine obere Seitenkante (7) des Sitzteils (1) an einem Stützabschnitt (10) der Seitenverkleidung (6) spannbar ist, wobei zwischen dem Sitzpolster (3) und der Seitenverkleidung (6) ein zumindest im Wesentlichen nur durch Biegung verformbares Kunststoffteil (12) im Bereich des Stützabschnitts (10) angeordnet ist, **gekennzeichnet durch** einen Gurtstraffer (8), der dazu ausgebildet ist, den Anschnallgurt (9) bei Bedarf zu spannen, wobei das Kunststoffteil (12) im Bereich des Stützabschnitts (10) zumindest eine Rippenstruktur (15,16), eine Wabenstruktur mit einem oder mehreren Wabenelementen (19) und/oder eine Fachwerkstruktur (21) aufweist.

2. Fahrzeugsitz nach Anspruch 1, **dadurch gekennzeichnet, dass** das Kunststoffteil (12) an die Form der Seitenverkleidung (6) derart angepasst ist, dass es zumindest bereichsweise flächig an dieser anliegt.

3. Fahrzeugsitz nach einem der vorhergehenden Ansprüche, **dadurch gekennzeichnet, dass** das Kunststoffteil (12) auf einem Sitzgestell (4) des Sitzteils (1) aufliegt und sich bis zu dem Stützabschnitt (10) der Seitenverkleidung (6) in die Höhe erstreckt.

4. Fahrzeugsitz nach einem der vorhergehenden Ansprüche, **dadurch gekennzeichnet, dass** das Kunststoffteil (12) durch die Verformung in seiner Höhe verkleinerbar ist.

5. Kraftfahrzeug mit zumindest einem Fahrzeugsitz (2) gemäß einem der Ansprüche 1 bis 4.

## Claims

1. Vehicle seat for a motor vehicle, comprising a seat part (1) which has a seat cushion (3) and a side covering (6) that covers a longitudinal side of the seat cushion (3), and comprising a seat belt (9) which is associated with at least the seat part (1) and is intended for a user of the vehicle seat (2), it being possible to tension the seat belt (9) over at least one upper side edge (7) of the seat part (1) on a support portion (10) of the side covering (6), a plastics part (12) which can be deformed at least substantially only by bending being arranged between the seat cushion (3) and the side covering (6) in the region of the support portion (10), **characterized by** a belt tensioner (8) which is designed to tension the seat belt (9) when required, the plastics part (12) having, in the region of the support portion (10), at least one rib structure (15, 16), a honeycomb structure comprising one or more honeycomb elements (19) and/or a lattice structure (21).

2. Vehicle seat according to claim 1, **characterized in that** the plastics part (12) is adapted to the shape of the side covering (6) in such a way that it lies flat against it at least in regions.

3. Vehicle seat according to either of the preceding claims,
**characterized in that** the plastics part (12) rests on a seat frame (4) of the seat part (1) and extends upward to the support portion (10) of the side covering (6).

4. Vehicle seat according to any of the preceding claims, **characterized in that** the height of the plastics part (12) can be reduced by the deformation.

5. Motor vehicle comprising at least one vehicle seat (2) according to any of claims 1 to 4.

## Revendications

1. Siège de véhicule pour un véhicule automobile, comportant une partie de siège (1) qui présente un rembourrage de siège (3) et un revêtement latéral (6) recouvrant un côté longitudinal du rembourrage de siège (3), et comportant une ceinture de sécurité (9) associée au moins à la partie de siège (1) pour un utilisateur du siège de véhicule (2), dans lequel la ceinture de sécurité (9) peut être tendue par l'intermédiaire d'au moins un bord latéral supérieur (7) de la partie de siège (1) au niveau d'une section d'appui (10) du revêtement latéral (6), dans lequel une pièce en matière plastique (12) déformable au moins sensiblement uniquement par flexion est disposée entre le rembourrage de siège (3) et le revêtement latéral (6) dans la zone de la section d'appui (10), **caractérisé par** un tendeur de ceinture (8) qui est conçu pour tendre la ceinture de sécurité (9) en cas de besoin, dans lequel la pièce en matière plastique (12) présente dans la zone de la section d'appui (10) au moins une structure à nervures (15, 16), une structure en nid d'abeilles comportant un ou plusieurs éléments en nid d'abeilles (19) et/ou une structure en treillis (21).

2. Siège de véhicule selon la revendication 1, **caractérisé en ce que** la pièce en matière plastique (12) est adaptée à la forme du revêtement latéral (6) de telle sorte qu'elle s'applique à plat contre celui-ci au moins dans certaines zones.

3. Siège de véhicule selon l'une des revendications précédentes, **caractérisé en ce que** la pièce en matière plastique (12) repose sur une carcasse de siège (4) de la partie de siège (1) et s'étend en hauteur jusqu'à la section d'appui (10) du revêtement latéral (6).

4. Siège de véhicule selon l'une des revendications précédentes, **caractérisé en ce que** la pièce en matière plastique (12) peut être réduite en hauteur par la déformation.

5. Véhicule automobile comportant au moins un siège de véhicule (2) selon l'une des revendications 1 à 4.
